# EUROPÄISCHE PATENTSCHRIFT

(11) **EP 1 436 164 B1**
(45) Veröffentlichungstag und Bekanntmachung des Hinweises auf die Patenterteilung: **23.04.2008**
(21) Anmeldenummer: 02774673.4
(22) Anmeldetag: 30.09.2002
(51) Int. Cl.: B60N 2/36

(54) **FAHRZEUGSITZ MIT SCHWENKBARER RÜCKENLEHNE**
VEHICLE SEAT WITH PIVOTING BACKREST
SIEGE DE VEHICULE A DOSSIER PIVOTANT

(30) Priorität: 10.10.2001 DE 10149858
(43) Veröffentlichungstag der Anmeldung: 14.07.2004
(73) Patentinhaber: Johnson Controls GmbH, 51399 Burscheid (DE)
(72) Erfinder: HALADUDA, Guido, 42799 Leichlingen (DE); HöRL, Michael, 42929 Wermelskirchen (DE); COMES, Michael, 51373 Leverkusen (DE); STACHEL, Patrick, 42853 Remscheid (DE); LINK, Walter, 51379 Leverkusen (DE)
(74) Vertreter: Hemmelmann, Klaus
(86) Internationale Anmeldenummer: PCT/EP2002/010953
(87) Internationale Veröffentlichungsnummer: WO 2003/033296

(56) Entgegenhaltungen:
- GB-A- 2 355 180
- US-A- 5 383 699
- PATENT ABSTRACTS OF JAPAN vol. 1996, no. 05, 31. Mai 1996 (1996-05-31) -& JP 08 011677 A (MAZDA MOTOR CORP), 16. Januar 1996 (1996-01-16)
- PATENT ABSTRACTS OF JAPAN vol. 018, no. 589 (M-1701), 10. November 1994 (1994-11-10) -& JP 06 219196 A (MAZDA MOTOR CORP), 9. August 1994 (1994-08-09)
- PATENT ABSTRACTS OF JAPAN vol. 2000, no. 06, 22. September 2000 (2000-09-22) -& JP 2000 071833 A (SUZUKI MOTOR CORP), 7. März 2000 (2000-03-07)

## Beschreibung

Die Erfindung betrifft einen Sitz, insbesondere einen Rücksitz eines Kraftfahrzeugs, umfassend eine Sitzbasis, ein Sitzteil und eine Rückenlehne sowie einen ersten Gelenkarm mit horizontalen Drehachsen, der im hinteren Bereich des Sitzteils einerseits und an der Sitzbasis andererseits angelenkt ist, wobei die Rückenlehne aus einer im Wesentlichen aufrechten Gebrauchsstellung horizontal auf das Sitzteil schwenkbar und mit diesem zur Sitzbasis hin in eine Cargostellung absenkbar und drehbar am sitzteilseitigen Gelenk des ersten Gelenkarms angelenkt ist und das Sitzteil eine starre, nach oben ragende Lasche aufweist, deren auskragendes Ende am ersten Gelenkarm angelenkt ist.

### Stand der Technik

Ein gattungsgemäßer Fahrzeugsitz ist aus den Druckschriften GB 2 355 180 A sowie US 5,383,699 bekannt. Er besteht aus einem über einen vorderen und einen hinteren Gelenkarm mit dem Fahrzeugboden absenkbar verbundenen Sitzteil und einer daran drehbar angeordneten Rückenlehne. Der hintere Gelenkarm und die Rückenlehne bilden dabei mit dem Sitzteil im Bereich einer vom Sitzteil hochragenden Lasche ein gemeinsames Gelenk aus, welches jedoch nicht zur Verrieglung des Fahrzeugsitzes verwendet wird. Hierzu sind vielmehr gesonderte Mittel vorgesehen.

Ein weiterer Fahrzeugsitz wird in der noch unveröffentlichten deutschen Gebrauchsmusteranmeldung 201 14 059.4 beschrieben. Der Sitz besteht aus einer an der Fahrzeugkarosserie verankerten Sitzbasis sowie einem Sitzteil und einer Rückenlehne, welche in der Gebrauchsstellung die Sitzfläche ausbilden. Zur Vergrößerung der Ladefläche oder zum Erzeugen einer Tischfläche ist die Rückenlehne aus der aufrechten Position in eine horizontale Cargostellung zum Sitzteil hin schwenkbar.

Um eine Kollision zwischen der Polsterung von Sitzteil und Rückenlehne zu vermeiden, bevor letztgenannte die horizontale Position eingenommen hat, ist das Sitzteil gegenüber Rückenlehne und Sitzbasis absenkbar ausgebildet. Zu diesem Zweck ist es vorne und hinten über zwei im Wesentlichen parallel zueinander ausgerichteten Gelenkarmen mit der Sitzbasis verbunden. Beim Verschwenken der Rückenlehne, die ihrerseits über ein gesondertes Gelenk mit der Sitzbasis verbunden ist, wird mittels eines zwischen Rückenlehne und Sitzteil wirkenden Hebelmechanismus das Absenken des Sitzteils herbeigeführt. Beim Aufrichten der Rückenlehne wird durch die gleiche Vorrichtung das Anheben des Sitzteils bewirkt.

### Aufgabe

Der Erfindung liegt die Aufgabe zugrunde, den Fahrzeugsitz in seinen verschiedenen Funktionsstellungen mit geringem konstruktivem Aufwand zu arretieren.

### Lösung

Die Aufgabe wird erfindungsgemäß dadurch gelöst, dass die Lasche und der erste Gelenkarm im Bereich des gemeinsamen Gelenks auf ihrem Umfang örtlich mit einer Verzahnung versehen sind, in welche die Verzahnung einer an der Rückenlehne angeordneten Klinke in Eingriff bringbar ist.

Bevorzugt ist dabei im vorderen Bereich des Sitzteils ein zweiter Gelenkarm angeordnet, der am Sitzteil einerseits und an der Sitzbasis andererseits angelenkt ist und im Wesentlichen parallel zum ersten Gelenkarm ausgerichtet ist. Das Sitzteil bildet auf diese Weise mit den vorderen und hinteren Gelenkarmen sowie mit der Sitzbasis in etwa ein Parallelogramm aus und wird beim Absenken weitgehend horizontal nach vorne und nach unten verlagert. Durch geringe Abweichungen von der Idealgestalt des Parallelogramms läßt sich die Kinematik gezielt verändern, so dass das Sitzteil in Gebrauchsstellung vorne gegenüber der Horizontalen rampenartig angehoben, in der Cargostellung jedoch waagrecht ausgerichtet wird.

Um die Endlage des Sitzes in der Gebrauchsstellung zu definieren, stützen sich die Lasche und der erste Gelenkarm in der Gebrauchsstellung über einen bevorzugt am ersten Gelenkarm angeordneten Stütznocken aufeinander ab. Ein Überdrehen der Rückenlehne wird dadurch verhindert, dass sich Rückenlehne sowie Lasche oder Gelenkarm in Gebrauchsstellung über einen an Lasche oder Gelenkarm angeformten Stütznocken aufeinander abstützen.

Bevorzugt sind die örtliche Verzahnung von Lasche und erstem Gelenkarm genau in der Gebrauchs- beziehungsweise Cargostellung deckungsgleich ausgerichtet und mit der kongruent ausgebildeten Verzahnung der Klinke in Eingriff bringbar. Dadurch ist das obere Gelenk des hinteren Gelenkarms in jeder Drehrichtung arretiert, wodurch unter Verwendung einer einzigen Sperreinrichtung sowohl ein Verschwenken der Rückenlehne als auch das Absenken der Sitzfläche blockiert werden.

Die Klinke ist mit Vorteil drehbeweglich an der Rückenlehne angeordnet und mittels eines Nockens in den Raststellungen sperrbar, so dass die Verzahnung nicht selbsthemmend ausgeführt werden muß. Mit dem Einrasten des Nockens wird ferner angezeigt, dass die Klinke in die deckungsgleich ausgerichteten Verzahnungen von Lasche und Gelenkarm eingegriffen hat und der Sitz nunmehr in der Gebrauchs- oder Cargostellung arretiert ist.

Um zu verhindern, dass sich ein Insasse auf einen noch nicht in Gebrauchsstellung arretierten Sitz setzt, kann außerdem vorgesehen werden, dass die Rückenlehne erst dann in die Gebrauchsstellung bringbar ist, wenn das Sitzteil seinerseits die Gebrauchsstellung eingenommen hat. Um die Rückenlehne dennoch in ergonomisch günstiger Position als Hebel zum Aufrichten des Sitzteils verwenden zu können, ist sie bevorzugt nur bis in eine nach vorne geneigte Stellung zurückschwenkbar, bevor das Sitzteil die Gebrauchsstellung eingenommen hat. In dieser Stellung der Rückenlehne ist nicht zu befürchten, dass das Sitzteil durch das Körpergewicht eines Insassen belastet wird. Eine derartige Kinematik läßt sich mit geringem konstruktiven Aufwand dadurch realisieren, dass an den Umfang des Gelenkarms ein mit der Klinke in Wirkzusammenhang stehender Vorsprung angeformt ist, gegen welchen die Klinke beim Aufrichten der Rückenlehne solange in Anschlag bringbar ist, bis der Gelenkarm seinerseits die Gebrauchsstellung eingenommen hat.

Um das Anheben des Sitzteils beim Schwenken der Rückenlehne in die Gebrauchsstellung zu erleichtern, ist nach einer weiteren Ausbildung der Erfindung ein erstes Federelement beim Absenken des Sitzteils spannbar. Die in ihm gespeicherte Energie unterstützt nach dem Lösen der Arretierung die Lageänderung des Sitzes aus der Cargostellung. Um ein Anschlagen des Sitzes in der Gebrauchsstellung zu vermeiden, kann ferner ein zweites Federelement vorgesehen werden, dass beim Anheben des Sitzteils spannbar ist und der Kraft des ersten Federelements insbesondere kurz vor Erreichen der Gebrauchsstellung entgegenwirkt.

### Figuren

Die Figuren stellen beispielhaft und schematisch eine Ausführung der Erfindung dar.

Es zeigen:
- Fig. 1: die Seitenansicht eines erfindungsgemäßen Sitzes in der Gebrauchsstellung
- Fig. 2: den Sitz nach Fig. 1 in der Cargostellung
- Fig. 3: das gemeinsame Gelenk von Rückenlehne, Lasche und Gelenkarm in einer perspektivischen Ansicht in Gebrauchsstellung
- Fig. 4: eine perspektivische Ansicht desselben Gelenks in Cargostellung
- Fig. 5: eine vergrößerte Darstellung von Klinke und Gelenkarm gemäß Anspruch 9

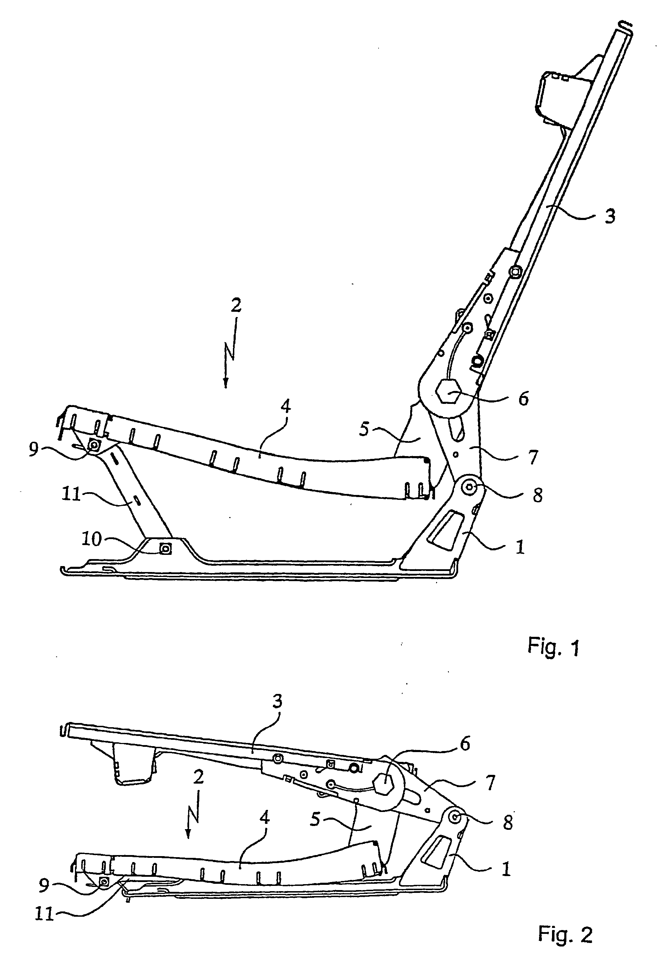

Der in Fig. 1 dargestellte Fahrzeugsitz besteht aus einer Sitzbasis 1, die ortsfest mit dem Boden der Fahrzeugkarosserie verschraubt ist, sowie ein Sitzteil 2 und eine Rückenlehne 3, die im Gebrauch mit nicht dargestellten Polsterelementen versehen sind. Selbstverständlich umfaßt die Erfindung auch solche Ausführungsformen, bei denen die Sitzbasis 1 mit einem an sich bekannten Mechanismus für die Längsverstellung des Sitzes versehen ist.

Das Sitzteil 2 besteht aus einer Sitzwanne 4, die an ihrem hinteren Ende starr mit zwei nebeneinander angeordneten, nach oben ragenden Laschen 5 verbunden ist. Das auskragende Ende der Laschen 5 ist als um eine horizontale Achse drehbares Gelenk 6 ausgebildet, an das die oberen Ende der Gelenkarme 7 angelenkt sind. Das untere Ende der Gelenkarme 7 ist über ein weiteres horizontal drehbares Gelenk 8 mit der Sitzbasis 1 verbunden.

Eine ähnliche Anordnung mit zwischen Gelenken 9 und 10 angeordneten Gelenkarmen 11 findet sich im vorderen Bereich von Sitzteil und Sitzbasis. Die Gelenkarme 7, 11 bilden mit diesen näherungsweise ein Parallelogramm aus, wobei das von den Gelenkarmen 7, 11 geführte Sitzteil beim Absenken in die Cargostellung (Fig. 2) gleichzeitig nach vorne verlagert wird.

Die Rückenlehne 3 ist mit ihrem unteren Ende ebenfalls im Gelenk 6 drehbar angeordnet, so dass sie einerseits um eine horizontale Achse herum auf das Sitzteil 2 schwenkbar ist und andererseits gemeinsam mit diesem abgesenkt werden kann. In der Cargostellung steht daher oberhalb der Rückenlehne ein vergrößerter Frachtraum zu Verfügung.

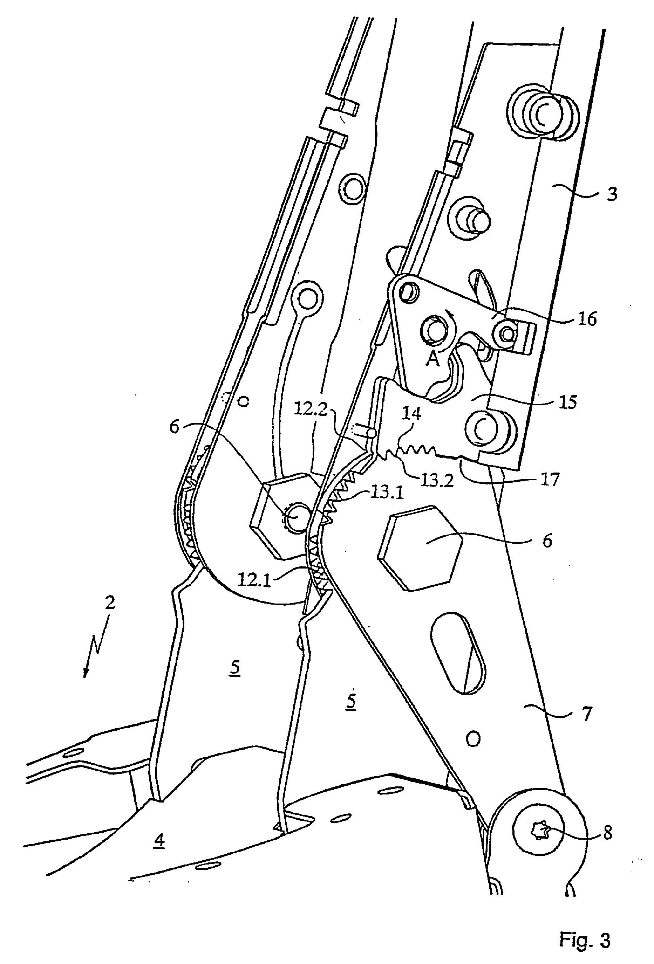

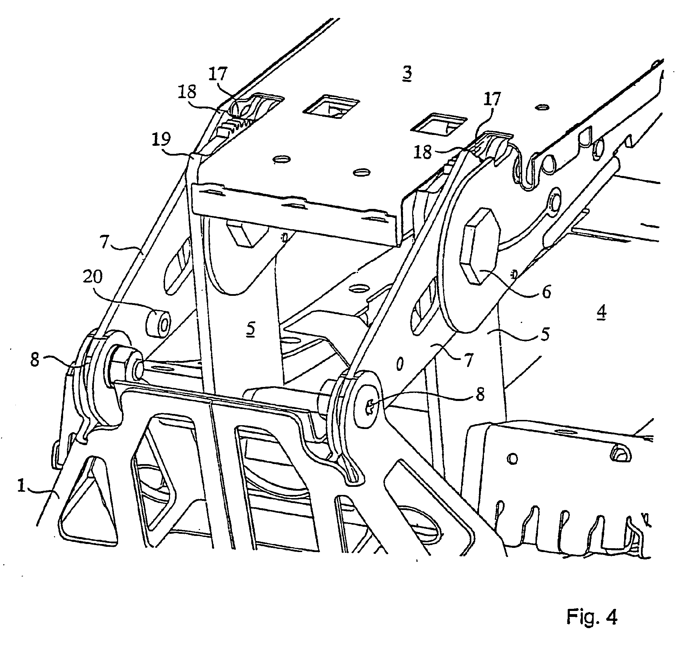

Wie aus Fig. 3 ersichtlich, sind die Laschen 5 im Bereich des Gelenks 6 auf ihrem Umfang örtlich mit Verzahnungen 12.1 und 12.2 und die Gelenkarme 7 mit Verzahnungen 13.1 und 13.2 versehen. In der dargestellten Gebrauchs-lage sind die Verzahnungen 12.2 und 13.2 deckungsgleich zueinander ausgerichtet, so dass eine mit einer kongruenten Verzahnung 14 ausgestattete, an der Rückenlehne 3 drehbar angeordnete Klinke 15 in die Verzahnungen 12.2 und 13.2 einrasten kann. Dadurch werden die Lasche 5, der Gelenkarm 7 und die Rückenlehne 3 drehfest zueinander festgestellt und der Sitz insgesamt in der Gebrauchsstellung arretiert. Ein Nocken 16 sichert die Klinke 15 nach dem Einrasten in ihrer Lage. Durch Drehung in Richtung des Pfeils A, die durch eine nicht dargestellte Betätigungseinrichtung herbeigeführt wird, ist der Nocken ferner dazu geeignet, die Klinke von den Verzahnungen 12.2 und 13.2 abzuheben, so dass Rückenlehne 3 und Sitzteil 2 in die Cargolage (Fig. 4) verfahrbar sind. In dieser Position gelangen die Verzahnungen 12.1 und 13.1 in Überdeckung, in welche die Klinke 15 nachfolgend einrastet. Der Sitz ist nun in der Cargoposition gesichert. Das Lösen der Klinke 15 zum erneuten Überführen des Sitzes in die Gebrauchsstellung erfolgt sinngemäß.

Die Rückenlehne 3 läßt sich in diesem Fall jedoch nur soweit aufrichten, bis die angehobene Klinke 15 mit ihrem Umfang an einem Vorsprung 17 anliegt, der seinerseits an den Umfang des Gelenkarms 7 angeformt ist. Erst dann, wenn der Gelenkarm 7 die Gebrauchsstellung eingenommen und damit relativ zur Rückenlehne 3 verdreht hat, kann die Klinke 15 am Vorsprung 17 vorbeidrehen. Die Rückenlehne ist nun in die in Fig. 3 dargestellte Gebrauchsstellung schwenkbar, in der die Klinke 15 wieder in die Verzahnungen 12.2 und 13.2 einrastet. Dabei stützt sich die Rückenlehne 3 über die Klinke 15 an Stütznocken 18, 19 ab, die an die Lasche 5 und den Gelenkarm 7 angeformt sind. Einen Endanschlag für die Drehbewegung zwischen den Laschen 5 und Gelenkarmen 7 bilden an letzterem angeordnete Stütznocken 20.

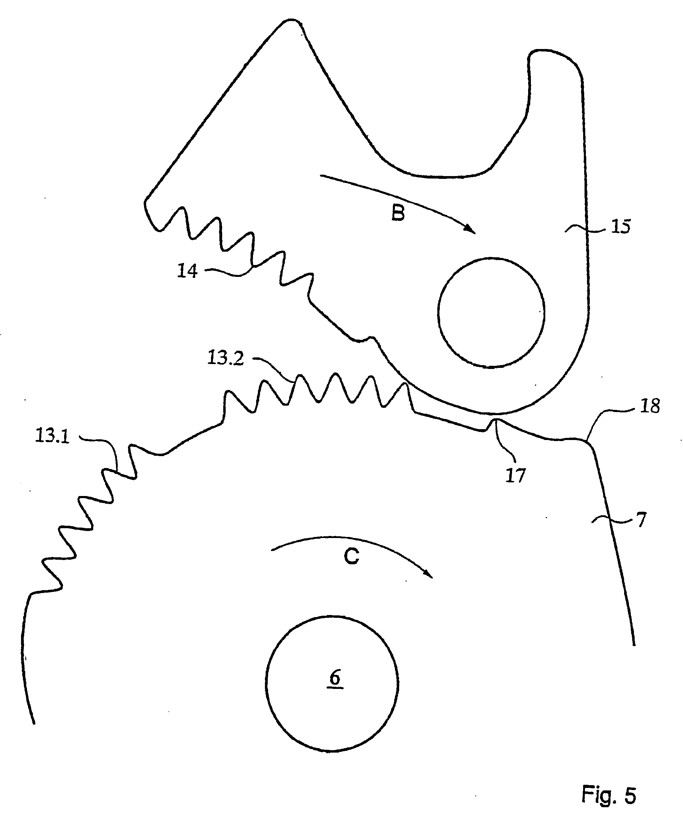

Fig. 5 zeigt in vergrößerter Darstellung die Anlage der Klinke 15 am Vorsprung 17, der am Umfang des Gelenkarms 7 angeformt ist. Dieser verhindert ein Weiterschwenken der an ihm in einer Zwischenstellung anliegenden Klinke 15 und damit auch der Rückenlehne 3 um das Gelenk 6 (Pfeil B) solange, bis der Gelenkarm 7 in Richtung des Pfeils C in die Gebrauchsstellung gedreht worden ist. Erst dann kann die Klinke 15 am Vorsprung 17 vorbeidrehen und in der Gebrauchsstellung gegen den Stütznocken 18 fahren.

### Bezugszeichen

- 1: Sitzbasis
- 2: Sitzteil
- 3: Rückenlehne
- 4: Sitzwanne
- 5: Lasche
- 6: Gelenk
- 7: Gelenkarm
- 8: Gelenk
- 9, 10: Gelenk
- 11: Gelenkarm
- 12, 13, 14: Verzahnung
- 15: Klinke
- 16: Nocken
- 17: Vorsprung
- 18, 19, 20: Stütznocken

## Patentansprüche

1. Sitz, insbesondere Rücksitz eines Kraftfahrzeugs, umfassend eine Sitzbasis (1), ein Sitzteil (2) und eine Rückenlehne (3) sowie einen ersten Gelenkarm (7) mit horizontalen Drehachsen, der im hinteren Bereich des Sitzteils einerseits und an der Sitzbasis andererseits angelenkt ist, wobei die Rückenlehne aus einer im Wesentlichen aufrechten Gebrauchsstellung horizontal auf das Sitzteil schwenkbar und mit diesem zur Sitzbasis hin in eine Cargostellung absenkbar und drehbar am sitzteilseitigen Gelenk (6) des ersten Gelenkarms (7) angelenkt ist und das Sitzteil (2) eine starre, nach oben ragende Lasche (5) aufweist, deren auskragendes Ende am ersten Gelenkarm (7) angelenkt ist, **dadurch gekennzeichnet, dass** die Lasche (5) und der erste Gelenkarm (7) im Bereich des gemeinsamen Gelenks (6) auf ihrem Umfang örtlich mit einer Verzahnung (12), (13) versehen sind, in welche die Verzahnung (14) einer an der Rückenlehne (3) angeordneten Klinke (15) in Eingriff bringbar ist.

2. Sitz nach Anspruch 1, **dadurch gekennzeichnet, dass** im vorderen Bereich des Sitzteils (2) ein zweiter Gelenkarm (11) angeordnet ist, der am Sitzteil einerseits und an der Sitzbasis (1) andererseits angelenkt und im Wesentlichen parallel zum ersten Gelenkarm (7) ausgerichtet ist.

3. Sitz nach Anspruch 1 oder 2, **dadurch gekennzeichnet, dass** sich die Lasche (5) und der erste Gelenkarm (7) in Gebrauchsstellung über einen am ersten Gelenkarm und/oder an der Lasche angeordneten Stütznocken (20) aufeinander abstützen.

4. Sitz nach Anspruch 1 bis 3, **dadurch gekennzeichnet, dass** sich die Rückenlehne (3) einerseits und die Lasche (5) und/oder der Gelenkarm (7) andererseits in Gebrauchsstellung über an die Lasche und/oder den Gelenkarm angeformte Stütznocken (18), (19) aufeinander abstützen.

5. Sitz nach einem der vorhergehenden Ansprüche, **dadurch gekennzeichnet, dass** die örtliche Verzahnung (12.1), (12.2) der Lasche und die örtliche Verzahnung (13.1), (13.2) des ersten Gelenkarms genau in der Gebrauchs- beziehungsweise Cargostellung deckungsgleich ausgerichtet und mit der kongruent ausgebildeten Verzahnung (14) der Klinke (15) in Eingriff bringbar sind.

6. Sitz nach einem der vorhergehenden Ansprüche, **dadurch gekennzeichnet, dass** die Klinke (15) drehbeweglich an der Rückenlehne (3) angeordnet und mittels eines drehbaren Nockens (16) in den Raststellungen sperrbar ist.

7. Sitz nach einem der vorhergehenden Ansprüche, **dadurch gekennzeichnet, dass** die Rückenlehne (3) erst dann in die Gebrauchsstellung bringbar ist, wenn das Sitzteil (2) seinerseits die Gebrauchsstellung eingenommen hat.

8. Sitz nach Anspruch 7, **dadurch gekennzeichnet, dass** die Rückenlehne (3) nur bis in eine nach vorne geneigte Stellung zurückschwenkbar ist, bevor das Sitzteil (2) die Gebrauchsstellung eingenommen hat.

9. Sitz nach einem der vorhergehenden Ansprüche, **dadurch gekennzeichnet, dass** an den Umfang des Gelenkarms (7) ein mit der Klinke (15) in Wirkzusammenhang stehender Vorsprung (17) angeformt ist, gegen welchen die Klinke beim Aufrichten der Rückenlehne (3) solange in Anschlag bringbar ist, bis der Gelenkarm seinerseits die Gebrauchsstellung eingenommen hat.

10. Sitz nach einem der vorhergehenden Ansprüche, **dadurch gekennzeichnet, dass** beim Absenken des Sitzteils (2) ein erstes Federelement spannbar ist.

11. Sitz nach Anspruch 7, **dadurch gekennzeichnet, dass** beim Anheben des Sitzteils (2) ein zweites Federelement spannbar ist.

## Claims

1. Seat, in particular rear seat of a motor vehicle, comprising a seat base (1), a seat part (2) and a backrest (3) and also a first articulated arm (7) having horizontal axes of rotation, said articulated arm being coupled in the rear region of the seat part at one end and to the seat base at the other end, with the backrest being pivotable from an essentially upright in-use position horizontally onto the seat part and being lowerable together with the latter toward the seat base into a cargo position, and being coupled rotatably to that joint (6) of the first articulated arm (7) which is on the seat part and the seat part (2) having a rigid, upwardly protruding link plate (5), the protruding end of which is coupled to the first articulated arm (7), **characterized in that** the link plate (5) and the first articulated arm (7) are provided locally on their circumference in the region of the common joint (6) with a toothing (12), (13) into which the toothing (14) of a pawl (15) arranged on the backrest (3) can be brought into engagement.

2. Seat according to Claim 1, **characterized in that** a second articulated arm (11) is arranged in the front region of the seat part (2), said articulated arm being coupled to the seat part at one end and to the seat base (1) at the other end and being aligned essentially parallel to the first articulated arm (7).

3. Seat according to Claim 1 or 2, **characterized in that** the link plate (5) and the first articulated arm (7) are supported on each other via a supporting cam (20) arranged on the first articulated arm and/or on the link plate.

4. Seat according to Claim 1 to 3, **characterized in that** the backrest (3), on the one hand, and the link plate (5) and/or the articulated arm (7), on the other hand, are supported on each other in the in-use position via supporting cams (18), (19) integrally formed on the link plate and/or the articulated arm.

5. Seat according to one of the preceding Claims, **characterized in that** the local toothing (12.1), (12.2) of the link plate and the local toothing (13.1), (13.2) of the first articulated arm are aligned congruently in the in-use and cargo positions and can be brought into engagement with the congruently designed toothing (14) of the pawl (15).

6. Seat according to one of the preceding Claims, **characterized in that** the pawl (15) is arranged rotatably on the backrest (3) and can be blocked in the latching positions by means of a rotatable cam (16).

7. Seat according to one of the preceding Claims, **characterized in that** the backrest (3) can only be brought into the in-use position when the seat part (2) has for its part taken up the in-use position.

8. Seat according to Claim 7, **characterized in that** the backrest (3) can only be pivoted back into a forwardly inclined position before the seat part (2) has taken up the in-use position.

9. Seat according to one of the preceding Claims, **characterized in that** a projection (17) which is operatively connected to the pawl (15) is integrally formed on the circumference of the articulated arm (7) and the pawl can be brought into abutment against said projection when raising the backrest (3) until the articulated arm has for its part taken up the in-use position.

10. Seat according to one of the preceding Claims, **characterized in that** a first spring element can be tensioned when the seat part (2) is lowered.

11. Seat according to Claim 7, **characterized in that** a second spring element can be tensioned when the seat part (2) is raised.

## Revendications

1. Siège, en particulier siège arrière d'un véhicule automobile, comprenant une base de siège (1), une partie de siège (2) et un dossier (3) ainsi qu'un premier bras articulé (7) avec des axes de rotation horizontaux, qui est articulé dans la région arrière de la partie de siège d'une part et à la base du siège d'autre part, le dossier étant articulé de manière rotative à l'articulation (6) du côté de la partie de siège du premier bras articulé (7) et de manière à pouvoir pivoter depuis une position d'utilisation essentiellement droite horizontalement sur la partie de siège et à pouvoir descendre avec celle-ci vers la base du siège dans une position de chargement, et la partie de siège (2) présentant une patte rigide (5) saillant vers le haut, dont l'extrémité saillante est articulée au premier bras articulé (7), **caractérisé en ce que** la patte (5) et le premier bras articulé (7) sont pourvus localement, dans la région de l'articulation commune (6), d'une denture (12, 13) sur leur périphérie, dans laquelle peut s'engager la denture (14) d'un cliquet (15) disposé sur le dossier (3).

2. Siège selon la revendication 1, **caractérisé en ce que**, dans la région avant de la partie de siège (2) est disposé un deuxième bras articulé (11), qui est articulé à la partie de siège d'une part et à la base du siège (1) d'autre part et qui est orienté essentiellement parallèlement au premier bras articulé (7).

3. Siège selon la revendication 1 ou 2, **caractérisé en ce que** la patte (5) et le premier bras articulé (7) s'appuient l'un sur l'autre dans la position d'utilisation par le biais d'une came de support (20) disposée sur le premier bras articulé et/ou sur la patte.

4. Siège selon la revendication 1 à 3, **caractérisé en ce que** le dossier (3) d'une part et la patte (5) et/ou le bras articulé (7) d'autre part s'appuient l'un sur l'autre dans la position d'utilisation par le biais de cames de support (18, 19) façonnées sur la patte et/ou sur le bras articulé.

5. Siège selon l'une quelconque des revendications précédentes, **caractérisé en ce que** la denture locale (12.1, 12.2) de la patte et la denture locale (13.1, 13.2) du premier bras articulé sont orientées exactement en correspondance dans la position d'utilisation, respectivement dans la position de chargement, et peuvent être amenées en engagement avec la denture (14) du cliquet (15) réalisée de manière coïncidente.

6. Siège selon l'une quelconque des revendications précédentes, **caractérisé en ce que** le cliquet (15) est disposé de manière mobile en rotation sur le dossier (3) et peut être bloqué au moyen d'une came rotative (16) dans les positions d'encliquetage.

7. Siège selon l'une quelconque des revendications précédentes, **caractérisé en ce que** le dossier (3) peut être amené dans la position d'utilisation seulement lorsque la partie de siège (2) a pour sa part adopté la position d'utilisation.

8. Siège selon la revendication 7, **caractérisé en ce que** le dossier (3) ne peut être pivoté en arrière que jusque dans une position inclinée vers l'avant, avant que la partie de siège (2) n'adopte la position d'utilisation.

9. Siège selon l'une quelconque des revendications précédentes, **caractérisé en ce que** sur la périphérie du bras articulé (7) est façonnée une saillie (17) coopérant avec le cliquet (15), contre laquelle le cliquet, lors de l'orientation du dossier (3), peut être amené en butée jusqu'à ce que le bras articulé ait pour sa part adopté la position d'utilisation.

10. Siège selon l'une quelconque des revendications précédentes, **caractérisé en ce que** lors de l'abaissement de la partie de siège (2), un premier élément de ressort peut être tendu.

11. Siège selon la revendication 7, **caractérisé en ce que** lors du soulèvement de la partie de siège (2), un deuxième élément de ressort peut être tendu.
